# EUROPÄISCHE PATENTSCHRIFT

(11) **EP 0 992 458 B1**
(45) Veröffentlichungstag und Bekanntmachung des Hinweises auf die Patenterteilung: **21.05.2003**
(21) Anmeldenummer: 99117695.9
(22) Anmeldetag: 08.09.1999
(51) Int. Cl.: C02F 1/00

(54) **Wasserfiltervorrichtung mit einer Auffangkanne und mit Heizelement**
Water filter treatment device with trap and heating element
Dispositif de filtration d'eau avec récipiant et élément de chauffage

(30) Priorität: 09.10.1998 DE 19846583
(43) Veröffentlichungstag der Anmeldung: 12.04.2000
(60) Teilanmeldung: 01128343.9
(73) Patentinhaber: Brita GmbH, 65232 Taunusstein (DE)
(72) Erfinder: Weyrauch, Detlev Dr., 56271 Kleinmaischeid (DE); Henke, Holger, 65824 Schwalbach/Ts. (DE)
(74) Vertreter: Weber-Bruls, Dorothée, Dr.

(56) Entgegenhaltungen:
- EP-A- 0 880 986
- WO-A-95/03733
- WO-A-96/22045
- WO-A-99/10076
- GB-A- 2 294 631
- US-A- 5 637 214

## Beschreibung

Die Erfindung betrifft eine Wasserfiltervorrichtung mit einer Auffangkanne mit vom oben angebrachter Schnaupe, mit gegenüberliegend hinten angebrachtem Griff und mit im unteren Kochbereich der Auffangkanne angeordnetem elektrischen Heizelement, wobei die Auffangkanne oben mit einem Deckel verschließbar ist und in einem Isoliereinsatz eine mit einem Reinigungsmittel füllbare Filterkartusche beherbergt, wobei im unteren Bereich des Isoliereinsatzes eine Durchlauföffnung für die Verbindung zwischen dem Auslaufende der Filterkartusche und der Auffangkanne angebracht ist.

Es gibt verschiedene Wasserfiltervorrichtungen mit elektrischem Heizelement, bei welchen das Wasser über eine motorgetriebene Pumpe durch den Griff und damit auch durch den im Griff befindlichen Filtereinsatz hindurchgedrückt und dann in die Auffangkanne befördert wird. Solche Vorrichtungen haben häufig einen zu voluminösen Griff, und auch der Gesamtaufbau ist komplex und im Betrieb bisweilen anfällig, weil es sich um ein druckführendes System handelt Auch das Entkalken ist schwierig, und es gibt Probleme mit der Füllstandsanzeige. Dennoch werden diese Systeme verwendet, weil die im Griff befindliche Filterkartusche mit dem Reinigungsmittel der Wärmeeinwirkung des Heizelementes nicht schädlich ausgesetzt ist.

Eine gattungsgemäße Wasserfiltervorrichtung ist aus der WO 96/22045 mit einem Isoliereinsatz bekannt, der eine schachtartige Vertiefung in seinem der Schnaupe zugewandten, vorderen Bereich aufweist, in die eine Filterkartusche einsetzbar ist. Dabei kann die schachtartige Vertiefung doppelwandig ausgeführt sein, um die Wärme des Heizelements oder des im Kochbereich erwärmten Wassers an schädlichen Angriffen an die Filterkartusche zu behindem. Der Bodenbereich des Isoliereinsatzes weist eine kleine, im wesentlichen horizontal verlaufende Scheibe auf, die in ihrer Mitte einen Auslaß aufweisen kann, über den sich mäanderförmig von der Filterkartusche gereinigtes Wasser zu einer Durchlauföffnung in die Auffangkanne erstreckt, die der Schnaupe zugewandt ist, also in dem vorderen Bereich der Auffangkanne liegt. Zur Montage bzw. Demontage der bekannten Wasserfiltervorrichtung und zum Wechsel von Filterkartuschen muß der Isoliereinsatz samt Filterkartusche aus der Auffangkanne entfernt werden, was arbeitsintensiv ist. Ferner ist es nachteilig, daß sich sowohl die Filterkartusche als auch die Durchlauföffnung im vorderen Bereich der Auffangkanne befinden, also der Schnaupe zugewandt sind, so daß beim Ausgießen ein Rückstand entstehen kann und besondere Maßnahmen, wie die mäanderförmige Wasserführung, vorgesehen sein müssen, damit erwärmtes Wasser nicht aus dem Kochbereich in die Filterkartusche zurückgedrückt wird. Abgesehen von der schwierigen Herstellung der bekannten Wasserfiltervorrichtung sind auch keine Maßnahmen vorgesehen, um einerseits kleinere und andererseits größere Wassermengen dem Heizelement zuzuführen. Vielmehr wird immer die gesamte Menge an Rohwasser durch die Filterkartusche und die Durchlauföffnung in den Kochbereich gelangen.

Konventionelle Wasserfiltervorrichtungen ohne Heizelement sind im Stand der Technik vielfach bekannt. So offenbart, beispielsweise, die US 5,637,214 einen Aufbau, bei dem in eine Auffangkanne ein Isoliereinsatz eingebracht wird, der in seinem der Schnaupe, der Auffangkanne abgewandten, hinteren Bereich eine schachtartige Vertiefung für eine Filterkartusche aufweist.

Aufgabe der vorliegenden Erfindung ist es, die gattungsgemäße Wasserfiltervorrichtung derart weiterzuentwickeln, daß sie die Nachteile des Stands der Technik überwindet. Insbesondere soll ein Filtereinsatz zum Einsatz kommen, in welchem sich die Filterkartusche befindet und der separat von dem Isoliereinsatz herausnehmbar, gegebenenfalls mit einer Filterkartusche bestückt und reinigbar ist. Ferner sollen die Gießeigenschaften der gattungsgemäßen Wasserfiltervorrichtung verbessert werden Auch der Betrieb der Wasserfiltervorrichtung soll an unterschiedliche Mengen von zu reinigendem Wasser besser angepaßt werden können.

Die erfindungsgemäße Aufgabe wird durch eine Wasserfilter vorrichtung gamäß Anspruch 1 gelöst. Erfindungswesentlich ist somit, daß die Durchlauföffnung in dem der Schnaupe gegenüberliegenden, hinteren Bereich der Auffangkanne angeordnet ist, der im wesentlichen horizontal verlaufende Teil der Trennwand zu der Durchlauföffnung hin nach unten geneigt ist und sich "auf der Höhe über dem Kochbereich" im Sinne von "oberhalb des Kochbereiches" wengistens teilweise über den Querschnitt der Auffangkanne erstreckt. Durch die Anordnung der Durchlauföffnung im hinteren Bereich der Auffangkanne ergeben sich bessere Gießeigenschaften, der Schwerpunkt liegt günstig näher am Griff, und es ist auch ein Zurücklaufen von erhitztem Kochwasser in die Filterkartusche weitgehend ausgeschaltet. Die Trennwand trennt mechanisch und thermisch den Kochbereich vom Rohrwasserbereich und liegt anders als bei den bekannten Vorrichtungen oberhalb des Kochbereiches. Durch das schwerkraftbetriebene System ergibt sich der Volumenstrom mit Vorteil durch die Geometrie der Einsätze, und der Volumenstrom ist auf die Kinematik des Ionenaustauschers gut abstimmbar. Dadurch ergeben sich gute Reinigungseigenschaften. Bei einem Gemisch des Reinigungsmittels von zum Beispiel 30% Kohle und 70% lonenaustauscher gelingt es, Geschmacks- und Geruchsstoffe durch die Wirkung der Kohle aus dem Wasser herauszuziehen, und durch den Ionenaustauscher gelingt ein durchgreifenden Entkarbonisieren bei gewünschter Filtriergeschwindigkeit.

Diese an sich bekannten Grundfunktionen einer Wasserfiltrationseinheit lassen sich bei der Wasserreinigungsvorrichtung gemäß der Erfindung auch bei abgeschaltetem Heizelement durchführen. Gleichwohl läßt sich erfindungsgemäß diese Filterfähigkeit voll aufrechterhalten, wenn die Anwendung in der beschriebenen Weise durch das Heizelement erweitert wird und gleichzeitig zu reinigendes Wasser auch zusätzlich erwärmt wird. Durch die Maßnahme der thermischen Isolierung kann die Filterkartusche und ihr darin enthaltenes Reinigungsmittel zum Beispiel auf Zimmertemperatur gehalten werden. Dadurch läßt sich die Kinematik der Filtration begünstigen und stabilsieren.

Bei entsprechender Ausgestaltung kann man den Filtereinsatz abnehmbar in dem Isoliereinsatz so fest verbinden, daß über der Filterkartusche aufgegossenes Rohwasser mit Sicherheit nicht direkt an den Boden des Isoliereinsatzes und damit auch die Durchlauföffnung gelangen kann, sondern zuerst die Filterkartusche durchlaufen muß. Es ergibt sich damit eine praktische Demontagemöglichkeit, und die Einsätze lassen sich gut reinigen.

Abgesehen von der Möglichkeit, unterschiedlich gestaltete Filterkartuschen in einer Wasserfiltervorrichtung der vorstehend beschriebenen Art einzusetzen und damit den Betrieb schon an unterschiedliche Mengen von zu reinigendem Wasser anzupassen, ist es erfindungsgemäß besonders günstig, wenn die Durchlauföffnung mit einer Verschließeinrichtung versehen ist. Dann nämlich kann man den Rohwasserbereich über der Filterkartusche vollständig mit Wasser füllen und dennoch nur eine gewünschte Menge an gereinigtem, aus der Filterkartusche herausgelaufenem Wasser durch die Durchlauföffnung in den Kochbereich führen. Ist diese Menge erreicht, kann man durch die Verschließeinrichtung den weiteren Durchfluß beenden. Es ist bekanntlich unschädlich, wenn das Reinigungsmittel in der Filterkartusche im Wasser steht oder auch wenn Rohwasser über der Filterkartusche stehenbleibt.

Ist es erwünscht, die gesamte Menge Rohwasser dem Kochbereich zuzuführen, dann erlaubt die Neigung des im wesentlichen horizontal verlaufenden Teiles der Trennwand zu der Durchlauföffnung hin, daß keine unerwünschten Restmengen in dem Isoliereinsatz stehenbleiben.

Grundsätzlich kann die Trennwand verschiedene Formen und Lagen haben. Ein Teil derselben verläuft im wesentlichen horizontal, was bedeutet, daß dieser Teil, der bei einer bevorzugten Ausführungsform zum Beispiel scheibenförmig ist, nur im allgemeinen horizontal verläuft, er gleichwohl eine geringe Neigung zur Durchlauföffnung hin hat.

Gemäß der Erfindung ist es für den Isoliereinsatz zweckmäßig, wenn er in Form eines oben offenen Bechers ausgestaltet ist und sein Boden durch den im wesentlichen horizontalen Teil der Trennwand gebildet ist. Bei dieser Auführungsform ist dann dieser im wesentlichen horizontale Teil der Trennwand derjenige Teil, welcher den Kochbereich nach unten hin abtrennt, so daß sich darüber entweder gerade gereinigtes und/oder zu reinigendes Wasser befindet. Durch diese mechanische Trennung ist gleichzeitig auch eine thermische Isolierung für das über dieser Trennwand befindliche Wasser gegeben, bzw. für den darüber befindlichen Raum gegeben, wenn dieser nicht mit Wasser gefüllt ist. Man kann dann die Filterkartusche darüber oder daneben anordnen und Rohwasser durch das Reinigungsmittel schicken, ohne daß das dann gerade gereinigte Wasser bereits schon eine Temperatur erreicht hat, welche für das Reinigungsmittel oder einen seiner Bestandteile schädlich wäre.

Bei vorteilhafter weiterer Ausgestaltung der Erfindung erstreckt sich der im wesentlichen horizontale Teil der Trennwand im wesentlichen über den ganzen Querschnitt der Auffangkanne derart, daß sich unter dem Rohwasserbereich und über dem Kochbereich ein Isolierraum befindet. Das Rohwasser kann sich bei dieser Ausführungsform in der vorstehend beschriebenen Weise mit Vorteil nicht unzulässig erwärmen. Bei dieser Ausführungsform ist in der den Boden des becherförmigen Isoliereinsatzes bildenden Trennwand keine schachtartige Vertiefung vorgesehen. Der Boden der Trennwand ist vielmehr der im wesentlichen horizontale Teil der Trennwand (dieser unterscheidet sich von den weitgehend vertikal aufragenden Seitenwandungen, die teilweise auch noch zu dem Isoliereinsatz gehören können). Die wesentliche Funktion des Isoliereinsatzes ist es, eine thermisch und räumlich/mechanische Trennung des Kochbereiches von darüber befindlichen Bereichen zu schaffen.

Die oben beschriebene Ausführungsform, bei welcher der Boden des becherförmigen Isoliereinsatzes aus im wesentlichen nur der horizontal verlaufenden Trennwand besteht, kann man eine breiter ausgestaltete Filterkartusche mit größerem Durchmesser aber geringerer Höhe im Vergleich zu der oben genannten verwenden. Während die Filterkartusche der Ausführungsform mit der schachtartigen Vertiefung ohne Deckel etwa die Höhe von 10 cm haben kann, kann man bei der eingangs oben beschriebenen Ausführungsform mit der breiteren und kürzeren Filterkartusche eine solche mit einer Höhe von etwa 3 cm einsetzen.

Das Kochvolumen nennt man die Größe des Kochbereiches (minus dem Kopfraum für den Kochvorgang). Dieses Kochvolumen hat bei einer bevorzugten Ausführungsform die Größe von 1,5 Liter.

Der oben erwähnte Trichter entspricht dem Rohwasserbereich und hat bei der bevorzugten Ausführungsform eine Größe von 0,75 Liter, also die Hälfte des Kochvolumens.

Der Trichter und das Kochvolumen bestimmen im allgemeinen die Bauhöhe und die Filterhöhe der Wasserreinigungsvorrichtung, deren Gesamthöhe deshalb im allgemeinen 30 cm nicht überschreiten sollte.

Bei einer guten praktischen und erfindungsgemäß bevorzugten Ausführungsform beträgt der Durchmesser der Auffangkanne 15 cm. Der Durchmesser der Filterkartusche der zuerst beschriebenen kurzen, breiten Art beträgt 8,5 cm, und seine Höhe beträgt 3,5 cm.

Trotz der thermischen und auch räumlichen Trennung des Kochbereiches von den anderen Funktionsbereichen der erfindungsgemäßen Wasserfiltervorrichtung kann diese für die Herstellung und auch den Gebrauch vereinfacht werden, denn der Filtereinsatz ist ebenso separat von der Filterkartusche wie der Isoliereinsatz. Die Vorrichtung gemäß der Erfindung kann dadurch leicht mit wenigen Griffen mit einer neuen Filerkartusche bestückt werden. Im Betrieb sind durch die geeigneten Anordnungen von Durchlauföffnung, Filterkartusche, Griff und Schnaupe gute Gießeigenschaften vorgegeben, und gleichwohl ist das Gerät gut zu reinigen. Die Ausgestaltung und der Aufbau des Isoliereinsatzes einerseits und des Filtereinsatzes andererseits ermöglichen verschiedene Ausgestaltungen für Verschließeinrichtungen der Durchlauföffnung. Dadurch kann im Betrieb je nach Wunsch des Benutzers die Durchlauföffnung logisch und gut sichtbar geschlossen oder geöffnet werden, so daß wenig oder viel zu reinigendes Wasser in den Kochbereich gelangen kann.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. In diesen zeigen:
- Figur 1: teilweise abgebrochen die Seitenansicht einer Wasserfiltervorrichtung einer ersten Ausführungsform mit kurzer Filterkartusche größeren Durchmessers,
- Figur 2: eine Draufsicht auf den Deckel mit einem drehbaren Verschluß,
- Figur 3: eine ähnliche Draufsicht wie Figur 2, wobei jedoch der Deckel von der Auffangkanne abgenommen ist und man auf die Filterkartusche blickt,
- Figur 4: eine weitere ähnliche Draufsicht wie Figur 2 oder 3, jedoch mit herausgenommenem Filtereinsatz, so daß man auf den im wesentlichen horizontalen Teil der sich über den ganzen Querschnitt der Auffangkanne erstreckenden Trennwand blickt,
- Figur 5: abgebrochen den oberen Teil der gesamten Vorrichtung in einer ähnlichen Querschnittsansicht wie Figur 1,jedoch in einer Richtung senkrecht zu der der Figur 1 gesehen,

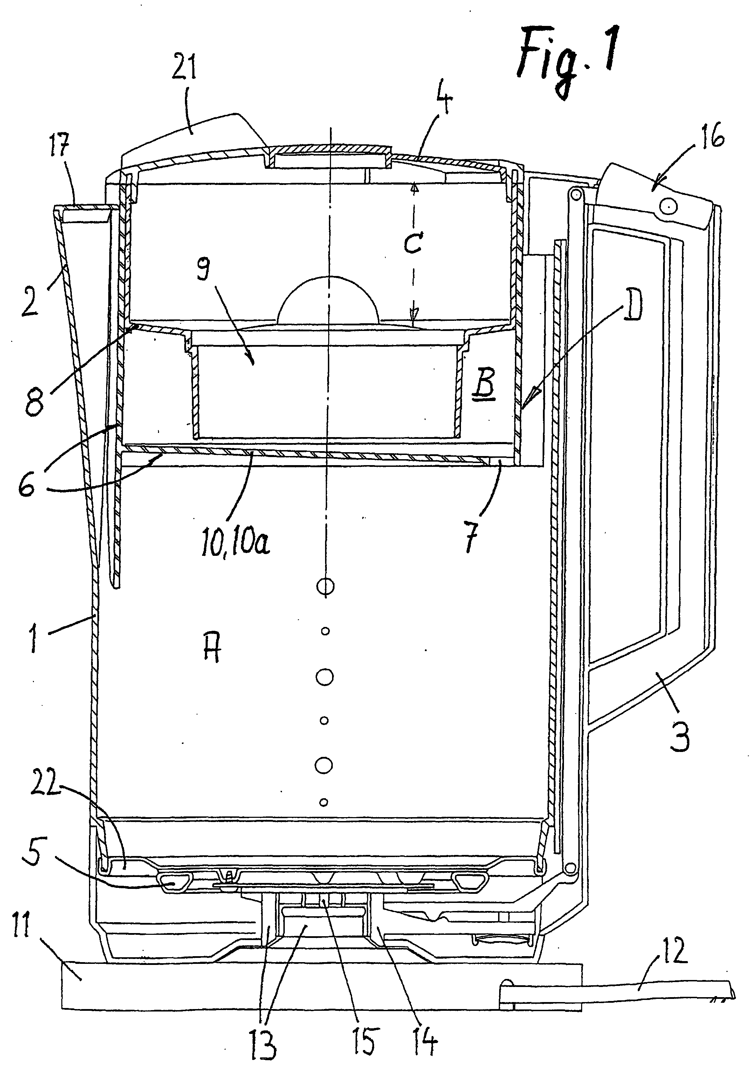

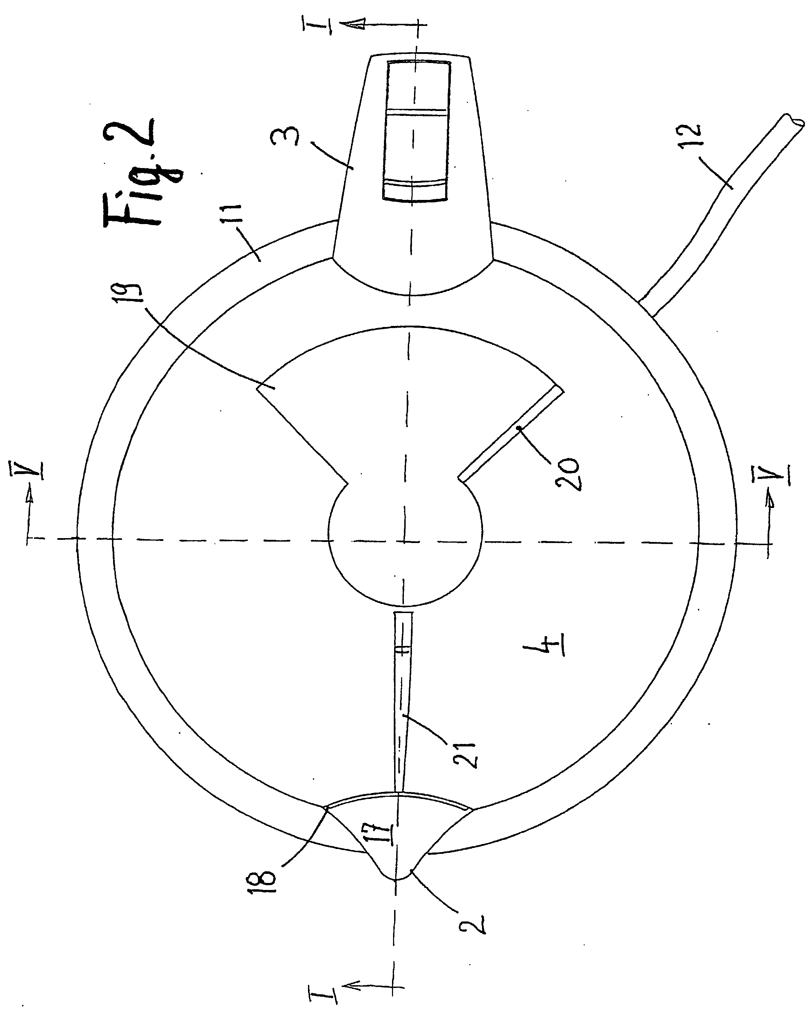

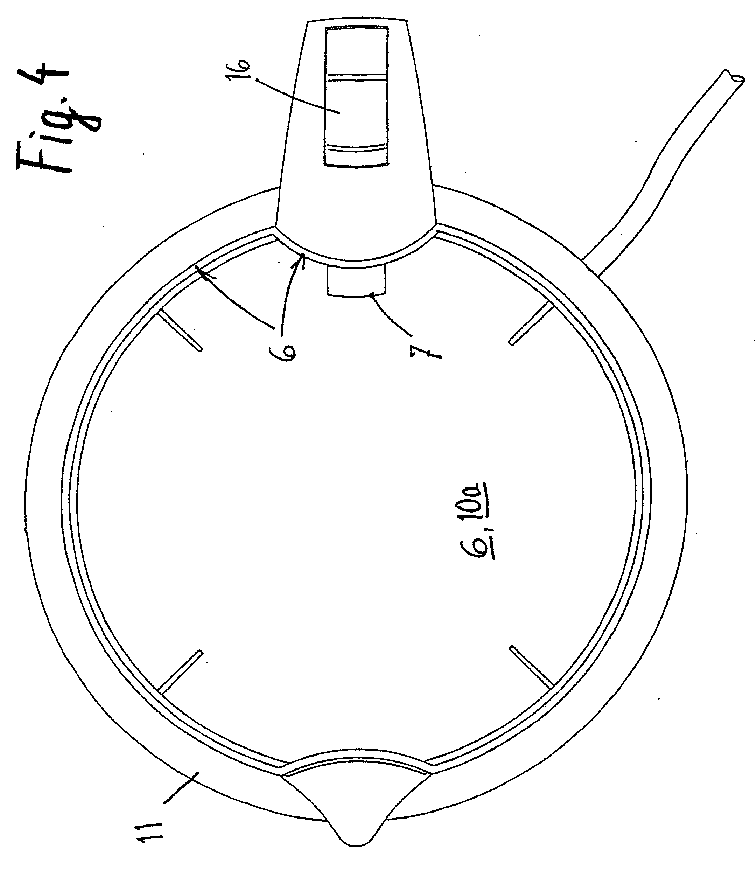

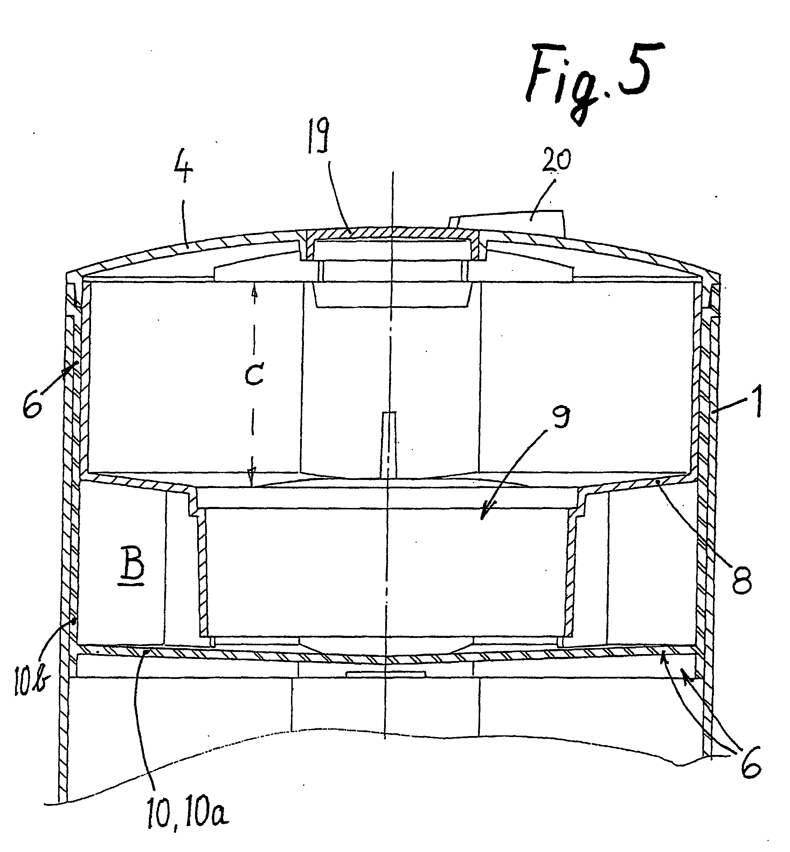

Die erfindungsgemäße Ausführungsform ist durch die Figuren 1 bis 5 dargestellt Die Querschnittsansicht der Figur 1 ist eine Ansicht entlang der Linie I-I der Figur 2. In der Figur 2 ist dabei der in Querschnittsansichten dargestellte Deckel weggelassen. Femer ist Figur 5 eine Querschnittsansicht (abgebrochen) entlang der Linie V-V in Figur 2.

Die Auffangkanne 1 mit vom oben angebracher Schnaupe 2 und gegenüberliegend hinten angebrachtem Griff 3 ist oben mit einem Deckel 4 verschließbar. Sie ist unten mit einem elektrischen Heizelement 5 versehen, während im oberen Bereich in einem Isoliereinsatz 6 mit Durchlauföffnung 7 ein Filtereinsatz 8 mit Filterkartusche 9 so angebracht ist, daß sich in der Auffangkanne 1 unten neben dem Heizelement 5 bis auf die Höhe des im wesentlichen horizontalen Teiles 10a der allgemein mit 10 bezeichneten Trennwand, welche Teil des Isoliereinsatzes 6 ist, ein Kochbereich A ergibt. Neben diesem, bei der ersten Ausführungsform nach den Figuren 1 bis 5 oberhalb der Trennwand 10 des Isoliereinsatzes 6, wird durch den beschriebenen Aufbau und insbesondere die Trennwand 10 ein Isolierraum B gebildet, während darüber und insbesondere über der Filterkartusche 9 das Rohwasser ansteht,welches sich in dem sogenannten Rohwasserbereich C befindet. Der Isolierraum B umgibt ringförmig die Filterkartusche 9 und ist auch unterhalb derselben vorhanden, denn er befindet sich zwischen den Wandungen des Isoliereinsatzes 6 einerseits und des Filtereinsatzes 8 andererseits.

Die Auffangkanne 1 steht auf einem Elektrostecksockel 11 mit elektrischer Zuleitung 12. Ein elektrischer Steckverbinder 13 sorgt in an sich bekannter Weise für die Zufuhr elektrischer Energie über nur teilweise gezeigte, in einem Steckerschutz 14 befindliche Stecklaschen 15. Das angeschlossene elektrische Heizelement 5 ist über einen Schalter 16 ein- und ausschaltbar. Letzterer befindet sich gut sichtbar und leicht für den Benutzer erreichbar am oberen Ende des Griffes 3.

Die Schnaupe 2 ist mit einer Abdeckung 17 verschließbar, die über einen Drehmechanismus 18 beim Ausgießen hochklappt und beim Zurückstellen der Auffangkanne 1 wieder in die Schließposition zurückfällt. Aus Figur 2 erkennt man deutlich auch den im Deckel 4 befindlichen drehbaren Verschluß 19 mit dazugehörigem Griffsteg 20, um Rohwasser frisch von oben bei aufgesetztem Deckel 4 In den Rohwasserbereich C einzugießen. Der Deckel selbst ist über den Deckelgriff 21 betätigbar und zu ergreifen.

Während bei beiden Ausführungsformen die Auffangkanne 1 aus einem transparenten Werkstoff, zum Beispiel Kunststoff oder Glas hergestellt ist, befindet sich das elektrische Heizelement 5 bei der ersten Ausführungsform unter dem sogenannten metallischen Heizboden 22, während bei der zweiten Ausführungsform der Figuren 6 bis 9 das elektrische Heizelement 5 über dem Boden 22a der Auffangkanne 1 befestigt ist.

Man erkennt, daß bei beiden Ausführungsformen die Durchlauföffnung 7 in dem der Schnaupe 2 gegenüberliegenden, hinteren Bereich D der Auffangkanne 1 angeordnet ist Zu dieser Durchlauföffnung 7 hin neigt sich der im wesentlichen horizontal verlaufende Teil 10a der Trennwand 10. wobei sich dieser Teil 10a auf der Höhe über dem Kochbereich A erstreckt.Bei der erfindungsgemäß Ausführungsform befindet er sich überwiegend im ganzen Querschnitt der Auffangkanne 1.

Der Isoliereinsatz 6 hat im wesentlichen die Form eines oben offenen Bechers, dessen Boden der im wesentlichen horizontale Teil 10a der Trennwand 10 in Scheibenform ist Bei der ersten Ausführungsform nach den Figuren 1 bis 5 ist diese Scheibe etwa kreisförmig. Von ihrem Rand gehen vertikal aufragende Teile 10b wie die Wände des Bechers ab und umschließen im unteren Teil den Isolierraum B und im oberen Teil den Rohwasserbereich C. Innerhalb des ringförmigen Isolierraumes B befindet sich die Filterkartusche 9, die in einem Filtereinsatz 8 gehalten ist. Dieser hat einen weiteren oberen Bereich unter Umschließen des Rohwasserbereiches C und den engeren unteren Bereich, in welchem sich die kurze Filterkartusche 9 mit dem etwas größeren Durchmesser befindet. Nach unten ist dieser Filtereinsatz 8 offen, so daß aus dem Boden der Filterkartusche 9 das gereinigte Wasser direkt in den Isolierraum B bzw. auf die Trennwand 10 und genauer auf den im wesentlichen horizontalen Teil 10a tropfen kann. Diese Trennwand 10 ist im wesentlichen eben und neigt sich zu dem hinteren Bereich D der Auffangkanne 1 bis zu der Durchlauföffnung 7. Infolgedessen wird alles Wasser aus dem Isolierraum B zu der Durchlauföffnung 7 zu fließen versuchen. Durch diese Öffnung 7 verläßt das gereinigte Wasser oder Filtrat den Isoliereinsatz 6. Der Filtereinsatz 8 ist ebenfalls becherförmig und ist abnehmbar im oberen Bereich des Isoliereinsatzes eingesetzt. Die vertikale Position des Filtereinsatzes 8 wird durch Auflegen auf mehrere Auflagerippen 33 sichergestellt. Die Verbindung des Isoliereinsatzes in der Auffangkanne 1 ist durch Einschrumpfen, Klemmen oder durch eine andere geeignete, feste Verbindung vorgesehen. Für die Ausführungsform nach den Figuren 1 bis 5 kann man anstelle der festen Verbindung alternativ auch die vertikale Position des Isoliereinsatzes 6 durch jeweils einen seitlichen Auflageabsatz 34 sicherstellen, der auf dem oberen Rand der Kanne 1 aufliegt.

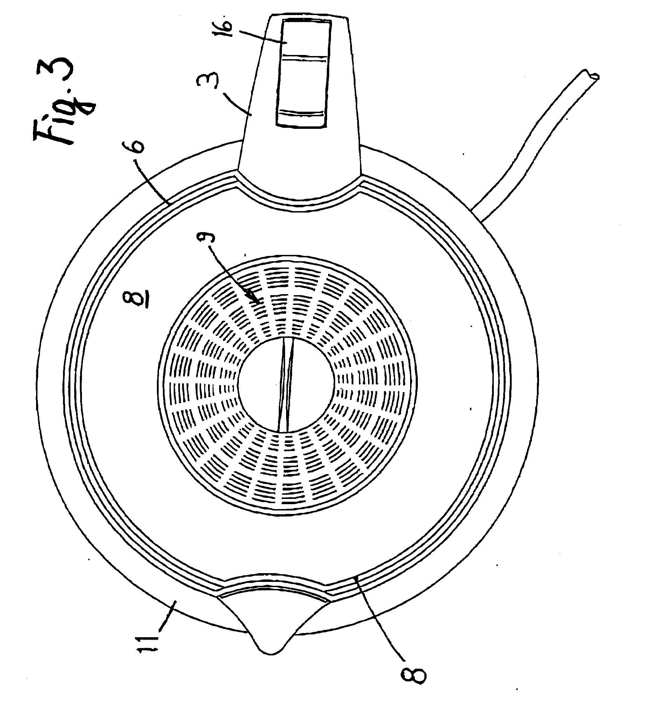

Im Betrieb kann daher der Benutzer das Rohwasser bei Öffnen des drehbaren Verschlusses 19 im Deckel 4 Wasser von oben in den Filtereinsatz 8 auf die Filterkartusche 9 gießen, deren Einlaufsieb man in Figur 3 erkennt. Mit Hilfe des Griffes 24 der Filterkartusche 9 kann letztere aus dem Filtereinsatz herausgenommen werden. Wird Rohwasser mit Zimmertemperatur oben eingegossen, dann strömt dieses im wesentlichen immer noch mit Zimmertemperatur durch die DurchlaufÖffnung 7 nach unten in den Kochbereich A. Dort wird das Wasser durch den Heizboden erwärmt und sammelt sich in der Auffangkanne 1, um je nach Bedarf durch die Schnaupe 2 ausgegossen zu werden. Beim Ausgießen neigt sich der Wasserpegel Im Kochbereich A in der Richtung, daß er sich von der Durchlauföffnung 7 entfernt. Im übrigen kann die Auffangkanne 1 wie ein üblicher Wasserkocher gehandhabt werden.

### Bezugszeichenliste

- 1: Auffangkanne
- 2: Schnaupe
- 3: Griff
- 4: Deckel
- 5: Elektrisches Heizelement
- 6: Isoliereinsatz
- 7: Durchlauföffnung
- 8: Filtereinsatz
- 9: Kartusche
- 10: Trennwand
- 10a: horizontaler Teil der Trennwand
- 10b: vertikal aufragender Teil der Trennwand
- 11: Elektrostecksockel
- 12: Elektrische Zuleitung
- 13: Elektrischer Steckverbinder
- 14: Steckerschutz
- 15: Steckerlaschen
- 16: Elektrischer Schälter
- 17: Abdeckung der Schnaupe
- 18: Drehmechanismus
- 19: Griffsteg
- 20: Deckelgriff
- 21: Heizboden
- 27: Auslaufende der Filterkartusche

- A: Kochbereich
- B: Isolierraum
- C: Rohwasserbereich
- D: Hinterer Bereich der Auffangkanne

## Patentansprüche

1. Wasserfiltervorrichtung mit einer Auffangkanne (1) mit vorn oben angebrachter Schnaupe (2), mit gegenüberliegend hinten angebrachtem Griff (3) und mit im unteren Kochbereich (A) der Auffangkanne (1) angeordnetem elektrischen Heizelement (5), wobei die Auffangkanne (1) oben mit einem Deckel (4) verschließbar ist und in einem Isoliereinsatz (6) eine mit einem Reinigungsmittel füllbare Filterkartusche (9) beherbergt, wobei im unteren Bereich des Isoliereinsatzes (6) eine Durchlauföffnung (7) für die Verbindung zwischen dem Auslaufende (27) der Filterkartusche (9) und der Auffangkanne (1) angebracht ist, **dadurch gekennzeichnet, daß**
innen in der Auffangkanne (1) ein Filtereinsatz (8) vorgesehen ist, in welchem die Filterkartusche (9) angeordnet ist, so daß Rohwasser über die Filterkartusche (9) in den Filtereinsatz (8) eingießbar ist und durch Schwerkraft bis mindestens unter die Filterkartusche (9) gelangen kann,
der Filtereinsatz (8) in dem Isoliereinsatz (6) derart angeordnet ist, daß zwischen dem Kochbereich (A) in der Auffangkanne (1) und dem Filtereinsatz (8) mit der Filterkartusche (9) eine im allgemeinen im Abstand von dem Filtereinsatz (8) angeordnete Trennwand (10, 10a) vorgesehen ist, die wenigstens teilweise die Form einer im wesentlichen horizontal verlaufenden Scheibe hat,
die Durchlauföffnung (7) in dem der Schnaupe (2) gegenüberliegenden, hinteren Bereich (D) der Auffangkanne (1) angeordnet ist, und
der im wesentlichen horizontal verlaufende Teil (10a) der Trennwand (10) zu der Durchlauföffnung (7) nach hinten geneigt ist und sich oberhalb des Kochbereiches (A) wenigstens teilweise über den Querschnitt der Auffangkanne (1) erstreckt, daß
der Isoliereinsatz (6) in Form eines oben offenen Bechers ausgestaltet ist und sein Boden durch den im wesentlichen horizontalen Teil (10a) der Trennwand (10) gebildet ist und daß sich der im wesentlichen horizontale Teil (10a) der Trennwand (10) im wesentlichen über den ganzen Querschnitt der ganzen Auffangkanne (1) derart erstreckt, daß sich unter dem Rohwasserbereich (C) und über dem Kochbereich (A) ein Isolierraum (B) befindet.

2. Wasserfiltervorrichtung nach Anspruch 1 oder 2, **dadurch gekennzeichnet, daß** die Durchlauföffnung (7) mit einer Verschließeinrichtung versehen ist.

## Claims

1. A water filter device with a collecting jug (1) having a spout (2) disposed at the front top and with a handle (3) disposed at the rear opposite the spout, and with an electric heating element (5) disposed in the bottom boiling zone (A) of the collecting jug (1), the collecting jug (1) being closable at the top by a lid (4) and accommodating in an insulating insert (6) a filter cartridge (9) fillable with a purification agent, a passage opening (7) being provided in the bottom zone of the insulating insert (6) for the connection between the outlet end (27) of the filter cartridge (9) and the collecting jug (1), **characterised in that**
a filter insert (8) is provided internally in the collecting jug (1) and contains the filter cartridge (9) so that untreated water can be poured through the filter cartridge (9) into the filter insert (8) and can flow by gravity at least to beneath the filter cartridge (9),
the filter insert (8) is so disposed in the insulating insert (6) that a partition (10, 10a) at least partially in the form of a substantially horizontal disc is provided between the boiling zone (A) in the collecting jug (1) and the filter insert (8) with the filter cartridge (9), said partition (10) being generally disposed at a distance from the filter insert (8),
the passage opening (7) is disposed in the rear zone (D) of the collecting jug (1) opposite the spout (2), and
the substantially horizontal part (10a) of the partition (10) is inclined rearwardly to the passage opening (7) and extends at least partially over the cross-section of the collecting jug (1) above the boiling zone (A), **in that**
the insulating insert (6) is formed as a beaker open at the top and its base is formed by the substantially horizontal part (10a) of the partition (10), and **in that**
the substantially horizontal part (10a) of the partition (10) extends substantially over the entire cross-section of the entire collecting jug (1) in such manner that an insulating chamber (B) is located beneath the untreated water zone (C) and above the boiling zone (A).

2. A water filter device according to claim 1 or 2, **characterised in that** the passage opening (7) is provided with a closure device.

## Revendications

1. Dispositif de filtration d'eau comportant un récipient (1) doté d'un bec (2) fixé devant en haut, d'une poignée (3) fixée à l'arrière en face et d'un élément chauffant (5) électrique disposé dans la zone inférieure de cuisson (A) du récipient (1) ; le récipient (1) pouvant être fermé en haut par un couvercle (4) et comportant dans un insert isolant (6), une cartouche filtrante pouvant être remplie par un agent de nettoyage, une ouverture d'écoulement (7) pour la liaison entre l'extrémité d'écoulement (27) de la cartouche filtrante et le récipient (1) étant disposé dans la zone inférieure de l'insert isolant (6), **caractérisé en ce que**
- un insert filtrant (8) est prévu dans le récipient, dans lequel insert on a disposé la cartouche filtrante (9) de manière à ce que l'eau brute puisse être versée dans le récipient (8) à travers la cartouche filtrante (9) et arriver au moins jusqu'en dessous de la cartouche filtrante (9) grâce à la force de gravité,
- l'insert filtrant (8) est disposé dans l'insert isolant (6) de manière à prévoir une paroi de séparation (10, 10a) disposée généralement de manière éloignée de l'insert filtrant (8) entre la zone de cuisson (A) dans le récipient (1) et l'insert filtrant (8) avec la cartouche filtrante (9), laquelle paroi a, au moins partiellement, la forme d'un disque s'étendant essentiellement de façon horizontale,
- l'ouverture d'écoulement (7) est disposée dans la zone (D) arrière du récipient (1) faisant face au bec (2), et
- la partie (10a) s'étendant essentiellement de façon horizontale de la paroi de séparation (10) est inclinée vers l'arrière en direction de l'ouverture d'écoulement et s'étend au dessus de la zone de cuisson (A), au moins partiellement, sur la section transversale du récipient (1),
- l'insert isolant (6) est réalisé sous la forme d'un godet ouvert en haut et dont le fond est formé par la partie (10a) essentiellement horizontale de la paroi de séparation (10), et
- la partie (10a) essentiellement horizontale de la paroi de séparation (10) s'étend sur toute la section transversale de tout le récipient (1) de manière à ce qu'une chambre isolante (B) se trouve en dessous de la zone de l'eau brute (C) et au dessus de la zone de cuisson (A).

2. Dispositif de filtration d'eau selon la revendication 1 ou 2, **caractérisé en ce que** l'ouverture d'écoulement (7) est dotée d'un dispositif de fermeture.
